# EUROPEAN PATENT APPLICATION

(11) **EP 2 471 396 A2**
(43) Date of publication of application: **04.07.2012**
(21) Application number: 10811312.7
(22) Date of filing: 30.07.2010
(51) Int. Cl.: A42B 3/30, A42B 3/18, H04N 7/18

(54) **IMPROVED VISION SYSTEM FOR PASSENGERS OF MOTORCYCLISTS**

(30) Priority: 25.08.2009 ES 200930622
(71) Applicant: Del Castillo Díaz, Julián, 31600 Burlada-Navarra (ES)
(72) Inventor: Del Castillo Díaz, Julián, 31600 Burlada-Navarra (ES)
(74) Representative: Maslanka, Dorota
(86) International application number: PCT/ES2010/000346
(87) International publication number: WO 2011/023836

(57) **Abstract**

The invention relates to an improved vision system for the passengers of motorcyclists, **characterised in that** it is applied to the vision of a co-pilot or passenger sitting on the motorcycle behind the motorcyclist or pilot. Said system is also **characterised in that** the motorcycle comprises a video camera and an electronic block for communication at least between the camera and video screen, while the helmet of said co-pilot or passenger comprises a video screen able to reproduce, in real-time, the visual content recorded by said camera.

## Description

### Object of the Invention

As expressed in the title of this specification, the present invention relates to an improved vision system for passengers of motorcyclists the essential purpose of which is to optimize the vision that a passenger or co-pilot of a motorcycle may have, for which the invention is based on comprising a video camera in the motorcycle connecting with a video screen arranged in the helmet of the aforementioned passenger or co-pilot.

### Background of the Invention

The passenger of a motorcycle must be protected from the wind and noise produced by said wind, for which the passenger is usually protected behind the pilot or driver of the motorcycle, such that his/her vision is limited to the back of the helmet of the pilot during the corresponding trip, which constitutes drawbacks relating to the aforementioned passenger being extremely bored, especially in the case of long trips.

Furthermore, if in certain cases the aforementioned passenger wants to see what is happening on the road, he/she has to move his/her head to the side in order to see, which is rather common and presents drawbacks relating to the fact that this movement of the head exposes it to the wind, its noise and bad back posture and excessive stress in the muscles of the neck, this movement of the head further creating the danger of throwing the motorcycle off balance.

For the purpose of solving these drawbacks, invention patent application number 200930595 was developed, essentially consisting of incorporating a camera in the front area of the helmet of the pilot such that the co-pilot or passenger of the motorcycle can see what is happening on the road by means of an electronic device in the helmet of the pilot. Although the solution provided in patent 2009930595 is satisfactory for some aspects, for others it generates drawbacks relating to the fact that the passenger depends at all times on the pilot, i.e., on one hand there is the visual dependence in which the passenger is going to see what the pilot sees because the pilot has the incorporated camera; and on the other hand, if the pilot turns his/her head the screen included in his/her helmet will turn at the same time, whereby altering the vision of the passenger. Another drawback of said patent of the State of the Art consists in that on racing motorcycles with high cylinder capacity the passenger and the pilot are very close to one another, their helmets practically touching, such that the vision of the passenger is not good because the screen is so close to his/her eyes without specific optical corrections for such a short distance.

The applicant is not aware of any vision system for passengers of motorcyclists in the current State of the Art which solves the mentioned drawbacks by means of a camera in the front part of the motorcycle and a screen in the helmet of the passenger of the motorcyclist as in the vision system of the present invention.

### Description of the Invention

To achieve the objectives and prevent the drawbacks indicated in the preceding sections, the invention consists of an improved vision system for passengers of motorcyclist applicable to the vision of a co-pilot or passenger sitting on the motorcycle behind the motorcyclist or pilot.

As a novel aspect, the motorcycle according to the invention comprises a video camera and an electronic block for communication at least between the camera and video screen, while the helmet of said co-pilot or passenger comprises a video screen able to reproduce, in real-time, the visual content recorded by said camera.

According to the preferred embodiments of the invention, communication between the electronic block and the camera is through a fixed cable, while communication between said block and the screen is through either a cable of the aforementioned helmet ending in a minijack connector or the like, or through a Bluetooth wireless system or the like.

According to the preferred embodiments of the invention, said video camera is an orientable micro camera located in the front area or nose of the motorcycle and oriented in correspondence with the movements of said helmet of the passenger by means of a servo-orientation device incorporated in said helmet.

According to a preferred embodiment of the invention, the aforementioned video screen is formed in a flip-up shield or visor integrated inside a helmet externally including a flip-up lever, such that by moving the visor or shield to a position in front of the eyes of the aforementioned passenger or co-pilot by means of the lever, the video screen switches on and by moving the visor or shield from said position by means of the lever, the aforementioned screen is switched off.

In another preferred embodiment of the invention, said video screen is formed in an external flip-up shield or visor that can be coupled to a conventional motorcycle helmet by means of the usual side pivots that this conventional helmet has for incorporating the sun visor or shield.

According to several embodiments of the invention, said electronic block can be formed partially or completely in the starcom (usual connection box in the motorcycles where motorcyclist and passenger plug in their helmets to communicate) of the motorcycle.

With the described structure, the invention has the advantages that the passenger of the motorcycle does not need to move his/her head to see what is happening on the road, the vision of the passenger or co-pilot also being independent of the movements of the head of the pilot because the camera is installed in the front part of the motorcycle and can be oriented by means of the movement of the helmet of the passenger or co-pilot.

In addition, the aforementioned shield of the helmet of the passenger could be optically adapted more easily so that the images captured by the eye are optimal. Another advantage of the invention consists of the screen of the helmet of the passenger of the motorcyclist possibly being connected alternatively to another different device of the camera of the motorcycle, such as a computer, a camera player of the motorcycle, a GPS system or the like. Furthermore, the camera arranged in the front part of the motorcycle provides a more sport-like vision perspective, such as those provided in some video games. Another advantage of the invention consists of the camera and the screen possibly being wirelessly connected to one another by Bluetooth, and by using the starcom of the motorcycle. It is also advantageous that said shield of the helmet of the passenger forming the video screen can be integrated in the helmet or coupled to a conventional helmet as a detachable kit.

A set of drawings are attached to aid in better understanding this specification forming an integral part thereof, in which the object of the invention is depicted with an illustrative and non-limiting character.

### Brief Description of the Drawings

Figure 1 shows a perspective view of a motorcycle and a helmet of a passenger of motorcyclist incorporating an improved vision system for passengers of motorcyclists according to the first embodiment of the invention and showing two elements of the motorcycle in respective enlarged detail views.
Figure 2 shows a profile view of the helmet of said first embodiment mentioned in preceding Figure 1, an internal flip-up shield thereof being in a lowered and activated position applied to the vision of the passenger of the motorcyclist.
Figure 3 shows a profile view of the helmet of preceding Figure 2 but the aforementioned internal flip-up shield is in a raised and deactivated position so that it does not interfere in the vision of the mentioned passenger motorcyclist.
Figure 4 is a perspective view of a conventional helmet of a motorcyclist in which an external flip-up shield is assembled as a kit as an alternative to the helmet of preceding Figures 1 to 3 to form a second embodiment of the invention, and said external flip-up shield being in a lowered and activated position applied to the vision of the person wearing the helmet.

### Description of one or several Embodiments of the Invention

Two embodiments of the invention are described below in reference to the reference numbers used in the drawings.

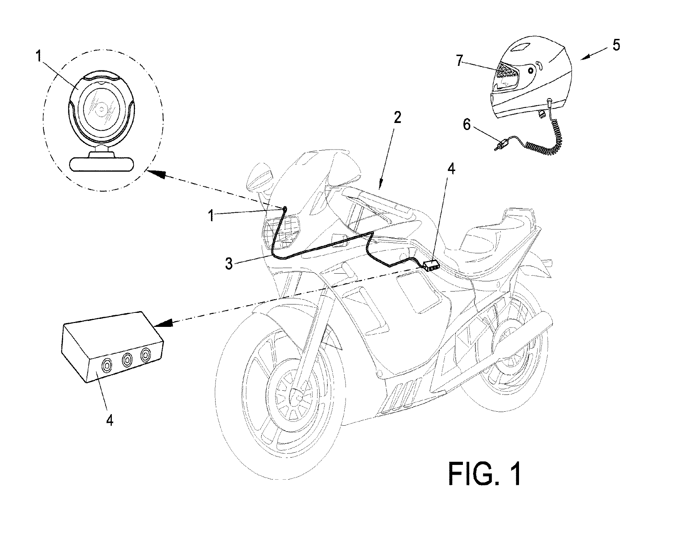

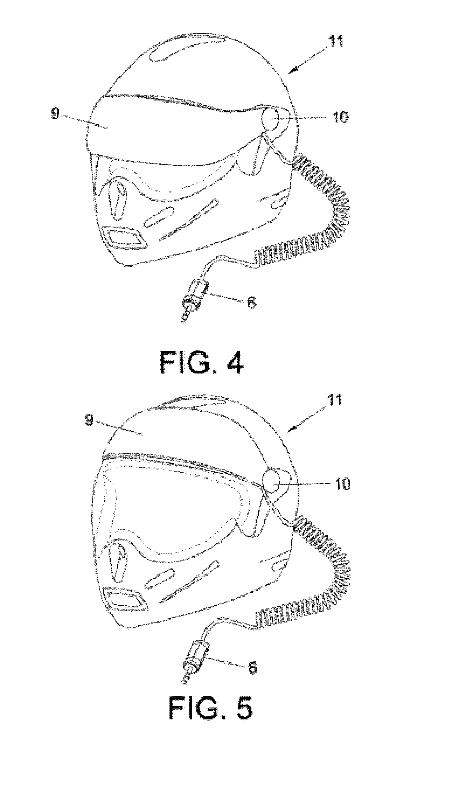

The first embodiment is shown in Figures 1 to 3, while Figures 4 and 5 correspond to the second embodiment of the invention. In the first embodiment, the vision system consists of a micro camera 1 with a rotational support installed in the front part of the motorcycle 2.

Said micro camera 1 is connected by means of a cable 3 to a starcom or electronic block 4 which is a connection box (audio and image inputs and outputs) which motorcycles have and are used for communications between pilot and passenger when they connect their helmets to said starcom 4.

In this first embodiment, the helmet 5 of the passenger of the motorcyclist is connected to the starcom 4 by means of a minijack 6. Said helmet 5 has an integrated internal flip-up shield forming a video screen that is the receptor of the image from the micro camera to help the passenger of the motorcyclist see the road.

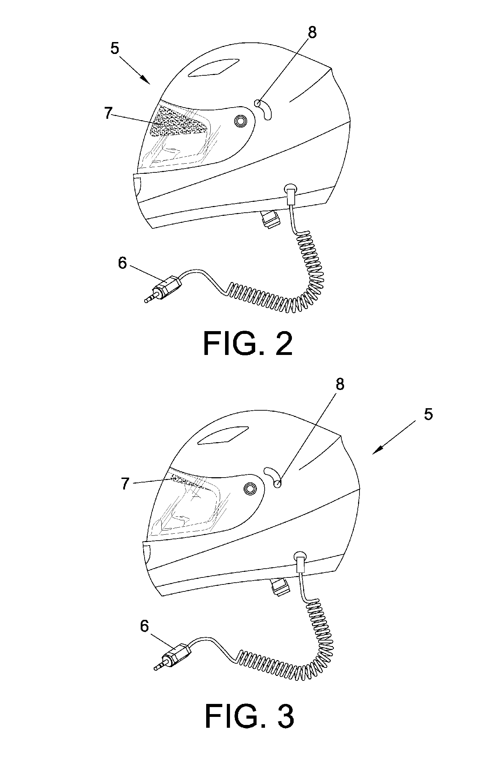

The aforementioned micro camera 1 has orientation means through the movements of the helmet, so the latter incorporates a servo-orientation device. Therefore, when the passenger wants to see what is in front of the motorcycle, he/she lowers the flip-up shield 7 by means of a lever or control 8, as seen in Figure 2, while to deactivate and raise said internal flip-up shield 7, he/she operates the lever 8 in the opposite direction, as seen in Figure 3. In addition, the connection of the minijack 6 of the helmet 5 with starcom 4, as well as the connection of said starcom 4 with the micro camera 1 through the cable 3, are shown in Figure 1.

The flip-up shield 7 is optically or electronically prepared so that the images it provides (very close to the eye) are optimal.

Furthermore, instead of seeing the image provided by the micro camera 1, the passenger can choose to see the image of a DVD device, GPS device, computer or the like by means of simply changing the connection provided by the minijack 6.

Furthermore, the connection between the micro camera 1 and the internal flip-up shield 7 forming the video screen can be through Bluetooth without needing to use the starcom 4 of the motorcycle 2.

The second embodiment of the invention corresponding to Figures 4 and 5 is similar to the first embodiment with the exception that the shield forming the corresponding screen is an external flip-up shield 9 that can be coupled to a conventional helmet 11 as a kit by means of the pins 10 of said helmet 11 conventionally provided for incorporating a sun shield or visor, it also being possible in this second embodiment to leave said external flip-up shield 9 applied to the vision of the passenger of the motorcyclist or not, as seen in Figures 4 and 5.

## Claims

1. An improved vision system for passengers of motorcyclists applicable to the vision of a co-pilot or passenger sitting on the motorcycle behind the motorcyclist or pilot, **characterized in that** the motorcycle (2) comprises a video camera (1) and an electronic block (4) for communication at least between the camera and video screen, while the helmet (5,11) of said co-pilot or passenger comprises a video screen (7,9) able to reproduce, in real-time, the visual content recorded by said camera (1).

2. The improved vision system for passengers of motorcyclists according to claim 1, **characterized in that** communication between the electronic block (4) and the camera (1) is through a fixed cable (3), while communication between said block (4) and the screen (7,9) is through either a cable of the aforementioned helmet (5,11) ending in a minijack connector (6) or the like, or through a Bluetooth wireless system or the like.

3. The improved vision system for passengers of motorcyclists according to claim 1 or 2, **characterized in that** said video camera (1) is an orientable micro camera located in the front area or nose of the motorcycle (2) and oriented in correspondence with the movements of said helmet (5,11) by means of a servo-orientation device incorporated in said helmet (5,11).

4. The improved vision system for passengers of motorcyclists, according to any one of the preceding claims, **characterized in that** said video screen is formed in a flip-up shield or visor (7) integrated inside a helmet (5) externally including a flip-up lever (8), such that by moving the visor or shield to a position in front of the eyes of the aforementioned passenger or co-pilot by means of the lever (8), the video screen switches on and by moving the visor or shield (7) from said position by means of the lever (8) the aforementioned screen is switched off.

5. The improved vision system for passengers of motorcyclists according to any one of claims 1 to 3, **characterized in that** said video screen is formed in an external flip-up shield or visor (9) that can be coupled to a conventional motorcycle helmet (11) by means of the usual side pivots (10) that this conventional helmet (11) has for incorporating the sun visor or shield.

6. The improved vision system for passengers of motorcyclists according to any one of the preceding claims, **characterized in that** said electronic block (4) is formed partially or completely in the starcom (usual connection box in motorcycles where motorcyclist and passenger plug in their helmets to communicate) of motorcycles (2).
